# EUROPEAN PATENT SPECIFICATION

(11) **EP 2 313 631 B1**
(45) Date of publication and mention of the grant of the patent: **19.04.2017**
(21) Application number: 09749982.6
(22) Date of filing: 15.05.2009
(51) Int. Cl.: F02D 13/02

(54) **COMPRESSION IGNITED INTERNAL COMBUSTION ENGINE AND METHOD OF OPERATING INTERNAL COMBUSTION ENGINE**
VERFAHREN UND VORRICHTUNG ZUM BETREIBEN EINES VERBRENNUNGSMOTOR MIT KOMPRESSIONSZÜNDUNG
MOTEUR À COMBUSTION INTERNE À ALLUMAGE PAR COMPRESSION ET PROCÉDÉ DE FONCTIONNEMENT D'UN MOTEUR À COMBUSTION INTERNE

(30) Priority: 19.05.2008 FI 20085471
(43) Date of publication of application: 27.04.2011
(73) Proprietor: Wärtsilä Finland Oy, 65380 Vaasa (FI)
(72) Inventor: JÄRVI, Arto, FI-65320 Vaasa (FI); LIAVÅG, Lars-Ola, FI-65380 Vaasa (NO); WIK, Christer, FI-65830 Vaasa (FI)
(74) Representative: Genip Oy
(86) International application number: PCT/FI2009/050401
(87) International publication number: WO 2009/141498

(56) References cited:
- EP-A- 0 015 791
- EP-A1- 0 849 448
- JP-A- 2005 180 285
- US-A- 4 114 643
- US-A1- 2003 226 538
- US-A1- 2006 070 603
- "INTERNAL COMBUSTION ENGINE FUNDAMENTALS", 1 January 1988 (1988-01-01), MCGRAW-HILL, NEW YORK * page 222 - page 223 *

## Description

### Technical field

The present invention relates to a compression ignited, supercharged internal combustion engine according to the preamble of claim 1. Invention relates also a method of operating an internal combustion engine according to the preamble of claim 10.

### Background art

A piston of an internal combustion engine transfers the energy released through the burning of fuel via a piston pin to a connecting rod and further to a crank mechanism. The piston is sealed to a cylinder of an engine by means of piston rings so that the transfer of energy would occur without unnecessary losses. A combustion chamber of internal combustion engine is defined partly by the upper part of a piston, cylinder liner and partly by a cylinder head. This area is subject to substantial thermal stresses. The walls of a piston extending in the longitudinal direction of the cylinder and located below the piston rings guide the movements of the piston and serve as lubrication surfaces. In modern compressor charged engines the pistons are under even more demanding circumstances.

Piston is connected to a crank shaft of the engine by means of connecting rod which is connected to the piston with a pin at its one end and to the crank shaft by a big end bearing. Main constructional factors of an engine are bore/stroke ratio, rod length/stroke ratio. Important functional feature are among others compression ratio, valve timing, rotational speed, supercharging and fuel feeding issues.

An example of an engine having these characteristics is shown in EP 0015791.

Combustion of fuel in a compression ignition internal combustion engine and converting the energy of the fuel into mechanical work is influenced by various factors, some of those being process-related while some factors are relating to mechanical construction of the engine. Combustion process in compression ignition engine is in great extent effected by the shape of the combustion chamber. Therefore the shape of the upper part of the piston is of great significance to the performance of the engine.

There are various disclosures in prior art describing a rotationally symmetrical bowl arranged in the top of the piston. For example US patents 6,732,703, 6,966,294 and 7,210448 show this kind of a shape of the upper part of the piston. The above mentioned patents address to problems relating to recent demands of environmental issues involved in exhaust gases as well as soot migration over the piston rings to the lubrication oil. They mainly relate to the shape of the piston top and co-operation between the piston and fuel injector, in which the shape of the piston bowl and the injection spray angle, cause the spray plume to impinge upon and contact the piston bowl surface in a certain manner, after exiting the injector orifices. The main concern of the patents is emission control and particularly NOₓ emissions.

Although the piston shape shown therein may be advantageous as such, there has emerged a need of further developing the construction and operation of the compression ignition engine so that even more improved performance of the engine may be provided.

An object of the invention is to provide a compression ignited supercharged internal combustion engine which meets the objectives of the invention. It is also an object of the invention to provide a method of operating combustion engine which result in improved performance while maintaining low exhaust gas emission levels, particularly NOx emissions.

In this context the term "percent-degrees" (%deg) means an integral of relative valve position over a range of crank angle, wherein the percentage means valve position in relation to cylinder diameter.

### Disclosure of the invention

Objects of the invention are met substantially as is disclosed in claims 1 and 10 . The other claims present more details of different embodiments of the invention.

According to a preferred embodiment of the invention, a compression ignited, supercharged internal combustion engine comprises a body in which at least one cylinder is arranged, a cylinder head arranged in connection with the cylinder provided with at least one inlet valve and at least one exhaust valve, a valve mechanism arranged for operating the valves in the cylinder head, a piston arranged in the cylinder moveably between its top dead center (TDC) and bottom dead center (BTC). It is characteristic that the valve mechanism is arranged to operate so that a scavenging area is 80 - 120 percent-degrees (%deg). This way a very efficient scavenging is provided which makes it possible to arrange the engine operating with considerably high performance without unduly compromising its reliability.

When the valve mechanism is arranged to operate so that the scavenging area (S) has its peak height less than 3% of the diameter of the cylinder the compression ratio of the engine may be increased by allowing the top of the piston coming considerably near the cylinder head and the valves. This is particularly advantageous with a piston shape according to an embodiment of the invention in which the middle top region of the piston is at the same level as the edge region of the top of the piston so that compression ratio of the engine is increased by the shape of the piston.

The valve mechanism is thus arranged to maintain the inlet and exhaust valves simultaneously open between exhaust and in-take strokes so that the increased thermal load caused by the increased compression ratio is substantially compensated.

According to an embodiment of the invention the inlet valve profile forms bigger area (%deg) than the exhaust valve profile. Thus the scavenging air, the pressure of which is maintained by the compressor of the turbocharger may easier enter the combustion chamber and further through the exhaust valve(s) away from the combustion chamber.

According to a method of operating a compression ignited supercharged internal combustion engine comprising a body in which at least one cylinder is arranged, a cylinder head arranged in connection with the cylinder provided with at least one inlet valve and at least one exhaust valve, a valve mechanism operating the valves in the cylinder head, a piston arranged in the cylinder and reciprocating between its top dead center (TDC) and bottom dead center (BTC). It is characteristic to the method, that the valve mechanism is operated so that a scavenging area (S) is 80 - 120 percent-degrees (%deg).

Preferably the piston is reciprocated so that it is brought at 3,5 - 4 % of cylinder diameter distance from the cylinder head at TDC position. This provides substantially high compression ratio and optimized distance between the edges of the piston and the cylinder head at TDC position.

Preferably the inlet valve is opened 1% at the latest when the crank angle is 335°, and the exhaust valve is 1% open at least until the crank angle is 385°. This provides very wide effective scavenging area and makes it possible to operate the valves so that the scavenging area (S) has its peak height less than 3% of the diameter of the cylinder.

### Brief Description of Drawing

In the following, the invention will be described with reference to the accompanying schematic drawings, in which
Figure 1 illustrates a compression ignited internal combustion engine according to an embodiment of the invention,
Figure 2 illustrates a cylinder assembly of the engine shown in figure 1,
Figure 3 shows the upper part of the piston according to a preferred embodiment of the invention in more detailed manner,
Figure 4 show a section of piston of figure 3 seen from direction A,
Figure 5 show relative opening of the inlet and exhaust valve according to the preferred embodiment of the invention.

### Detailed Description of Drawing

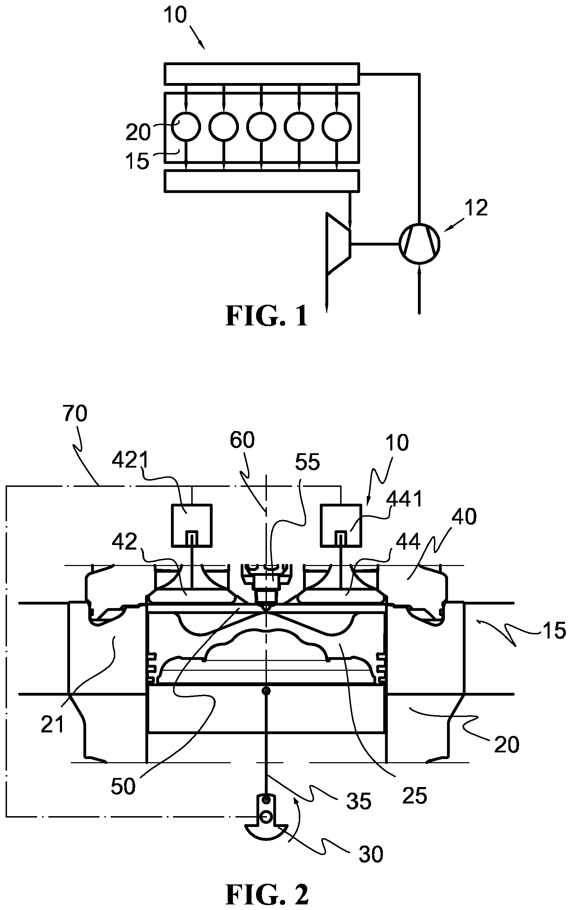

Figure 1 schematically shows a compression ignited internal combustion engine10. The engine comprises cylinders 20 arranged in the body 15 of the engine. The engine is super charged engine provided with a turbo-charger 12 coupled to its gas exchange system.

Figure 2 schematically shows a cylinder assembly of the compression ignited internal combustion engine10 according to a preferred embodiment of the invention, from which engine only a part of its body 15 is shown. For clarity reasons there is only shown one cylinder 20 of the engine 10 and it is clear that the engine may comprise several cylinders arranged e.g. in-line, as seen in figure 1, or e.g. as V -configuration. A piston 25 is arranged longitudinally movably into the cylinder 20 of the engine. In this context longitudinal direction means the direction of the central axis 60 of the cylinder. The piston 25 is coupled to a crankshaft 30 by means of a piston rod 35. Thus, the piston 25 may reciprocated between the top dead center (TDC) and bottom dead center (BDC). The stroke length of the engine is thus defined by the dimensions of the crankshaft 30.

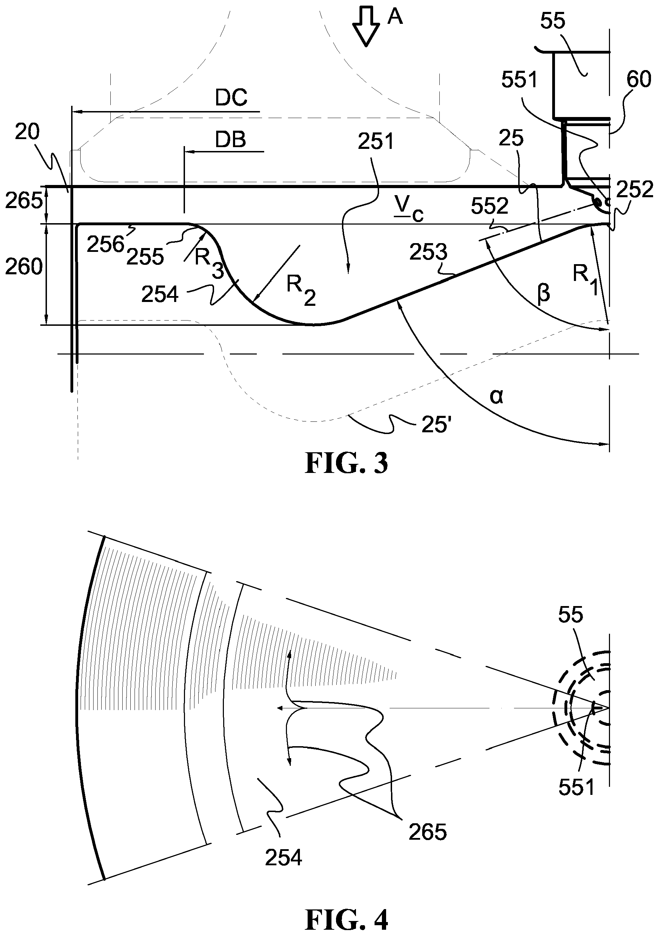

The engine 10 is provided also with a cylinder head 40 arranged on top of each cylinder 20. The cylinder head 40, cylinder 20 and the piston 25 define a combustion chamber 50 in each cylinder of the engine. There is also a fuel injector 55 arranged to the cylinder head 40 for injecting fuel in to the combustion chamber 50. In the embodiment of figure 2, the fuel injector is arranged on the central axis 60 of the cylinder and is provided with a number of fuel injection orifices 551 (Figure 3) in order to provide several simultaneous substantially radial jets of fuel during the injection phase.

In this case the cylinder 20 comprises a separate cylinder sleeve 21 being a removable part of the engine body 15. The cylinder head 40 is provided with at least one inlet valve 42 and at least one exhaust valve 44 for facilitating the gas exchange in the combustion chamber. However, usually modern four stroke engines comprise a pair of inlet valve and exhaust valves. The inlet valve 42 is provided with a first valve mechanism 421 for operating the inlet valves 42 of the engine. Respectively the exhaust valve 44 is provided with a second valve mechanism 441 for operating the exhaust valves 44 of the engine. The first and second valve mechanisms may also consist of one, combined valve mechanism controlling both the inlet and exhaust valves. The valve mechanism is provided with a linkage 70 with the position of the crankshaft 30 so that the positions of inlet valves and exhaust valves may be controlled also on the bases of the crank angle and thus position of respective piston. In practice there are several well known alternatives to realize the valve mechanism. The linkage 70 may comprise a mechanical, a hydraulic or an electric system or a combination of these systems, by means of which properly timed lifting behavior of each valve is provided.

Figure 3 shows in more detailed manner the upper part of the piston 25 according to a preferred embodiment of the invention at TDC position in the cylinder 20. In figure 3 only half of the upper part of the cylinder is shown due to the fact that the cylinder is symmetrical in respect to its central axis. A section of the piston of figure 3 is shown from direction A in the figure 4.

The piston 25 is arranged in the cylinder 20 having a diameter DC. In this context defining the diameter of the cylinder is more important than the diameter of the piston because it the surface of the cylinder which partly defines the combustion chamber of the engine 10. The upper part of the piston is provided with a bowl 251 which is rotationally symmetric in respect to the central axis 60. The bowl has a diameter DB. The piston has also substantially flat edge region 256 extending radially between the bowl 251 and outer rim of the piston encircling the piston top. The plane of the flat edge region is substantially in 90° angle in respect to the central axis 60 of the cylinder. The diameter of the bowl DB is defined according to the invention by a ratio of cylinder diameter DC / bowl diameter DB being about 1,15 - 1,65. The piston bowl is relatively deep having a depth 260. Bowl depth means the maximum distance of the bowl extending into the piston from the top edge thereof. The depth of the bowl 260 is defined according to the invention by a ratio of cylinder diameter DC / bowl depth 260 being about 9,2 -12,2. This provides, together with the diameter of the bowl the bases of arranging suitably formed (radially) outer region of the bowl, which is explained in the following.

The piston bowl 251 comprises the following radial regions. Firstly, the middle top region 252 of the upper part of the piston has curved shape with radius R₁. This region is relatively small having its diameter about less than 10% of the diameter DC of the cylinder 20. The radius R₁ is about 10% of the cylinder diameter DC. The middle top region is substantially at the same longitudinal position with flat edge region 256 in the direction of the central axis 60 of the piston. Thus the bowl 251 is formed around the middle top region.

The next region of the bowl 251 on the top of the piston is a conical region 253. The conical region 253 is arranged radially after the middle top of the piston, as its extension. In this context the radial direction is the from the center axis of the piston towards the periphery of the piston. The shape of the conical region is a truncated cone radially extending towards the periphery of the piston 25 between the middle top region 252 and the next region, namely a curved floor region 254. The surface of the conical region is at an angle α in respect to the central axis 60 of the cylinder. The angle is 65° < α < 75°. The curved floor region 254 in turn has a radius R₂. Advantageously bowl depth 260 / floor radius R₂ - ratio is about 0,9 - 1,2. This provides a form which along with the other features of the invention provides beneficial effects to the operation of the engine. The angle α together with the curved floor region brings about improved flame spread and turbulence generation in the combustion chamber of the engine 10.

As mentioned, the piston has substantially flat edge region 256 extending radially between the bowl 251 and outer rim of the piston facing the cylinder head. The curved floor region 254 of the bowl and the edge region 256 are connected with each other by means of a lip 255 having a radius R₃. Bowl dept 260 /lip radius R₃ -ratio is advantageously about 2,4 - 3. With this kind of piston bowl shape, together with the fuel injector arrangement, which will be described in the following, improved guidance of fuel jet and thus created plume may be provided.

The fuel injector 55 is arranged to the central axis 60 of the cylinder. The injector is provided with a number of orifices 551 directed radially and arranged equally spaced manner to the tip of the injector. The direction 552 of each fuel injection orifice is at an angle β in respect to the central axis 60 of the cylinder. The angle β is such that the direction of the fuel jet is substantially towards the curved floor region 254 of the piston. Angle α is substantially smaller than the angle β, thus the fuel jet and a plume thus created interacts with the surface of the piston such that reduced flame spread towards the liner of the cylinder and stronger lateral and inward flame spread take place. Thus, in the operation of the engine the fuel jet and a plume created mainly impinge on the curved floor region 254 of the piston. This brings about a desired pattern of the injected fuel, and gases induced by the fuel and the flame front created.

The start of the fuel injection takes place not earlier than 20° before TDC and at latest at TDC. Thus the majority of the plume created by the fuel injection and initiated combustion is formed while the piston is moving downwards as is shown in figure 3 by piston at lower position 25' with dotted line so that the desired combustion behavior is accomplished. Additionally, the plume is directed towards the curved floor region 254 of the piston and due to the shape of the bowl the plume divides to a great extent into opposite radial flows 265 as is depicted in figure 4. The injection is controlled so that the length of the injection period is such that a major part of the plume created is impinged to the curved floor region 254. This way the contact of the flame with the cylinder surface is so low that thermal load on liner and lube oil film is minimized.

The middle top region 252 of the piston is in the direction of the central axis 60 substantially at a same level as the edge region 256, which makes the compression volume V_{c} substantially small. Thus, the compression ratio, i.e. the ratio of volume swept by the piston between TDC and BDC + compression volume V_{c} to compression volume V_{c}, in the engine according to the invention is considerably high. Advantageously the compression ratio is from 15 to 18. This has the effect of considerably lowering fuel consumption but also tendency increasing the thermal load to the combustion chamber.

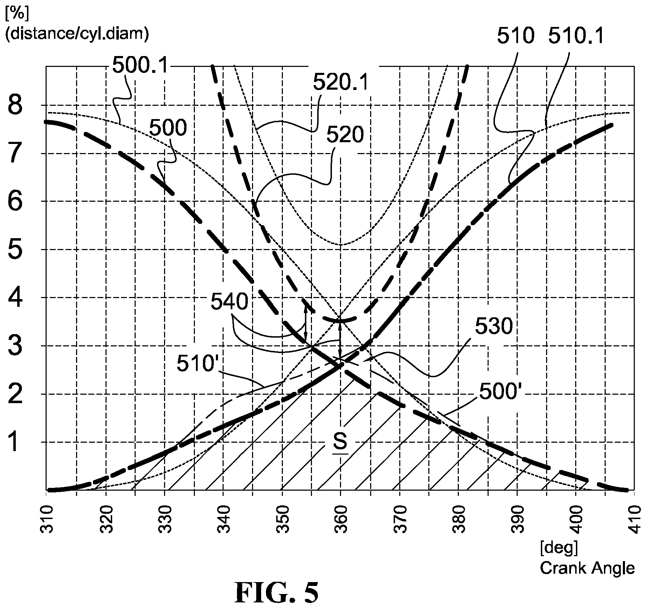

Now, in order to compensate the increased thermal load caused by the substantially small compression volume V_{c} in the engine according to the invention the first valve mechanism 421 for operating the inlet valves 42 of the engine and the second valve mechanism 441 for operating the exhaust valves 44 of the engine is arranged to operate in a specific manner, which is explained later in connection with and referring to the figure 5.

Additionally, the operation of the engine may be still improved by having the squish distance 265 i.e. the distance between the flat edge region 256 of the piston and the cylinder head considerably small at the TDC position of the piston. Preferably the squish distance at TDC is about 3.5-4% of the diameter of the cylinder DC. The clearance between the piston top edge and the cylinder head (squish distance) together with shape of the piston according to the invention enables the use of relatively high compression ratio and at the same time reduces the flame contact to the cylinder liner. Additionally the squish distance creates increased turbulence in the combustion chamber substantially before the start of injection of the fuel enhancing the ignition and combustion process.

Also, the injector 55 is very near to the middle top region 252 of the piston at its TDC position and thus at the time of commencing the fuel injection. In practice this means that the upper surface of the piston participates efficiently in guiding the fuel and flame, and also created plume towards the curved floor region.

Due to the higher compression ratio the thermal load particularly to exhaust valve would increase considerably high. In order to avoid undue thermal load the valve mechanism 421, 441 is arranged to operate in a certain manner which provides a synergistic effect to the operation of the engine 10 together with the above described form of piston top and fuel injection arrangement. The operation of the valve mechanism is described in the following with the reference to the Figure 5. Figure 5 describes the relative position of inlet valve 510 and exhaust valve 500 in respect of the crank angle (CA) according to an embodiment of the invention. There are also shown respective curves 510.1, 500.1 for a prior art arrangement in the figure 5. The relative position of the valve is defined as the percentage of the opening of the valve in relation to the diameter of the cylinder, which makes the value easier comparable to other engines. The curve 520 depicts the position of the piston top in relation to the cylinder head according to an embodiment of the invention. Respectively, there is also shown a curve 520.1 depicting the position of the piston top in relation to the cylinder head for a prior art arrangement in figure 5.

The engine is operated so that while the engine is running the crank mechanism of the engine is arranged to bring the piston near the cylinder head so that the squish distance is about 3.5-4% of the diameter of the cylinder DC and the compression ratio is about 15 - 18, and after the compression stroke the fuel injection is commenced at a crank angle of piston between 20° before TDC and TDC providing a pressure rise in the combustion chamber of the piston. As can be seen from figure 5 the piston is at about 3,5% distance from the cylinder head at TDC position i.e. at crank angle 360°. In practice the piston may be brought at 3,5 - 4 % distance from the cylinder head at TDC position. Since the compression ratio according to the invention is relatively high the additional pressure step induced from combustion is about 5 - 35% of the pressure induced from compression. After the combustion of the fuel the combustion chamber and the gases therein are expanding and moving the piston away from the cylinder head. After the crank angle (zero angle being TDC after compression stroke, with cycle length of 720 degrees) has reached about 124 degrees (not shown). At about 190 degree's crank angle the exhaust valve(s) has reached its 7,7% opening i.e. at its maximum. The valve lift profiles comprise preferably polynomial curves or curve sections.

Now, due to the high compression ratio and the combustion pressure as explained above, special measures are taken for the scavenging the combustion chamber of the engine. The valve mechanism is arranged to operate so that a so called scavenging triangle area S is formed during which the inlet and exhaust valves are simultaneously open. This is depicted by the diagonally hatched area in the figure 5, which area is defined by the valve curves 500, 510 and the horizontal axis i.e. the crank angle. The area S also defines a value of "percent-degrees" (%deg) which means an integral of relative valve position over a range of crank angle. According to the invention the scavenging triangle area S is 80 ≤ S ≤ 120 percent-degrees (%deg). The area of percent-degrees defines the opening profiles of the valves in respect of the crank angle and thus defines the operation of the valve mechanism. This way according to the invention the scavenging is adequately balanced with the results of the piston to the combustion process according to the invention. Additionally, it is notable that the scavenging triangle is substantially wide and low compared to the exemplary prior art solution, i.e. the valve curves 500, 510 are such the after initial opening of the inlet valve and before final closing of the exhaust valve the curves are considerably gently sloping. At the crossing point of curves 530 the position of the valves is about 2,6%.

In order to obtain the benefits of the invention the crossing point of the curves 530, which is also the peak of the scavenging area S, is less than 3%. Thus, given that the safety marginal 540 between the piston and the valves is maintained sufficiently big, the actual form of the curves 500, 510 and the scavenging triangle may be even wider as depicted by the lines 500', 510'. Thus, the basic idea is the provide the scavenging triangle substantially low, the peak being below 3% and still having the area 80 ≤ S ≤ 120 percent-degrees (%deg). As is shown in figure 5 the lift profiles need not to be symmetrical for inlet and exhaust valves.

As mentioned above, the inlet and exhaust valve profiles may be of different shape. It has been found that good results may be obtained also with a configuration in which the inlet valve profile 510 below 360 °CA forms bigger area (%deg) than the exhaust valve profile 500 above 360 °CA. This may be adopted by using the extension 510' on the inlet valve operation while using the curve 500 without the extension 500' on the exhaust valve operation. In such a configuration the clearance between exhaust valve and the piston may be kept bigger.

The scavenging area S is considerably wide since according to a preferred embodiment of the invention the inlet valve is arranged to open 1% at latest when the crank angle is 335°, and the exhaust valve is arranged to be still 1% open at least until the crank angle is 385°.

The piston is at about 3,5% distance from the cylinder head at TDC position i.e. at crank angle 360° so there is at least 0,5% clearance between the valves and the piston.

The invention is particularly suitable for engines having cylinder diameter larger than 200mm and operating with low grade liquid fuel, such as heavy fuel oil. Heavy fuel oil causes several factors specific to its contents to the combustion. For example exhaust gas temperature before the turbine has great effect on the fouling tendency of its surfaces. The scavenging method according to the invention keeps the exhaust gas temperature at acceptable level. Following is an example of some particulars for an engine having its cylinder diameter 460mm.
- depth of the bowl = 38 - 50 mm
- diameter of the bowl = 1,15 - 1,65 mm
- radius R₁ < 46mm
- radius R₂ = 36 - 48 mm
- radius R₃ = 12,6 - 21 mm
- the squish distance at TDC = 16 mm
- the scavenging triangle area S =110 %deg
- the crossing point of valve lift profiles = 12 mm

The opening of the inlet valve(s) starts at a crank angle 300-320°. In the lift profile 510 of the embodiment of figure 5 the opening of the inlet valve starts at crank angle 310°. The closing of exhaust valve(s) starts at a crank angle of about 310°. Between the crank angles about 310 - 410 degrees takes place a scavenging phase during which both the inlet and exhaust valves are simultaneously at least partly open, while fresh air coming through inlet valve(s) into the combustion chamber may flow through the combustion space. This provides an extended scavenging which at its part allows using the increased compression ratio thus improving the engine performance.

It should be noted that the compressor of the turbo charger 12 (Fig.1) is arranged to provide sufficient pressure for obtaining adequate scavenging function. The scavenging triangle area S of the invention provides very effective scavenging due to the bigger scavenging air flow through the valves. In addition to reducing the thermal load to the combustion chamber, this also provides lowered exhaust gas temperature before turbine, which in a heavy fuel oil operated engine diminishes fouling tendency of turbine of the turbo-charger.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in another embodiment when technically feasible.

## Claims

1. Compression ignited, supercharged internal combustion engine (10) comprising a body (15) in which at least one cylinder (20) is arranged, a cylinder head (40) arranged in connection with the cylinder provided with at least one inlet valve (42) and at least one exhaust valve (44), a valve mechanism (421, 441) arranged for operating the valves (42, 44) in the cylinder head, a piston (25) arranged in the cylinder moveably between its top dead center (TDC) and bottom dead center (BTC), **characterized in that** the valve mechanism (421, 441) is arranged to operate so that a scavenging area (S) is 80 - 120 percent-degrees (%deg) and the scavenging area (S) has its peak height less than 3% of the diameter of the cylinder (20), wherein the term "percent-degrees" (%deg) means an integral of relative valve position over a range of crank angle, wherein the percentage means valve position in relation to cylinder diameter.

2. Internal combustion engine according to claim 1, **characterized in that**, the areas (%deg) formed by inlet valve profile (510) and exhaust valve profile (500) are of different size.

3. Internal combustion engine according to claim 2, **characterized in that**, the inlet valve profile (510) forms bigger area (%deg) than the exhaust valve profile (500).

4. Internal combustion engine according to anyone of the preceding claims, **characterized in that**, the inlet valve is arranged to open 1% at the latest when the crank angle is 335°, and the exhaust valve is arranged 1% open at least until the crank angle is 385°.

5. Internal combustion engine (10) according to anyone of the preceding claims 1-3 , **characterized in that** the valve mechanism (421, 441) is arranged to keep both the inlet valve (42) and exhaust valve (44) at least partially open between crank angle 310 - 410°.

6. Internal combustion engine according to claim 1, **characterized in that**, the piston (25) is provided bowl (251) having a depth (260) arranged in the upper part of the piston, and a substantially flat edge region (256) surrounding the bowl, the bowl (251) comprising a middle top region (252), a conical region (253) radially extending towards the periphery of the piston at an angle (α) such that the depth of the bowl increases towards the periphery of the piston (25) and a curved floor region (254) having a radius (R₂) arranged radially after the conical region such that the depth of the bowl decreases, and a lip (255) between the curved floor region and the flat edge region (256), and that that the middle top region (256) of the piston is at the same level as the flat edge region (256) so that compression ratio of the engine (10) is increased by the shape of the piston.

7. Internal combustion engine (10) according to claim 5, **characterized in that** the valve mechanism (421, 441) is arranged maintain the inlet and exhaust valves simultaneously open between exhaust and intake strokes so that the increased thermal load caused by the increased compression ratio is substantially compensated.

8. Internal combustion engine (10) according to claim 5, **characterized in that** the squish distance (256) at TDC position is about 3,5 - 4 % of the diameter of the cylinder (DC).

9. Internal combustion engine (10) according to claim 6, **characterized in that** the bowl depth (260) / floor radius (R₂) - ratio is about 0,9 - 1,2.

10. A method of operating a compression ignited supercharged internal combustion engine comprising a body (15) in which at least one cylinder (20) is arranged, a cylinder head (40) arranged in connection with the cylinder provided with at least one inlet valve (42) and at least one exhaust valve (44), a valve mechanism (421, 441) operating the valves (42, 44) in the cylinder head, a piston (25) arranged in the cylinder reciprocating between its top dead center (TDC) and bottom dead center (BTC), **characterized in that** the valve mechanism (421, 441) is operated so that a scavenging area (S) is 80 - 120 percent-degrees (%deg) and that the scavenging area has its peak height less than 3% of the diameter of the cylinder (20).

11. A method according to claim 10, **characterized in that** the piston is reciprocated so that it is brought at 3,5 - 4 % of the diameter of the cylinder (DC) distance from the cylinder head at TDC position.

12. Internal combustion engine according to anyone of the preceding claims, **characterized in that**, the inlet valve is opened 1 % at the latest when the crank angle is 335°, and the exhaust valve is 1% open at least until the crank angle is 385°.

## Patentansprüche

1. Kompressionsgezündeter, aufgeladener Verbrennungsmotor (10), umfassend einen Körper (15), in dem mindestens ein Zylinder (20) angeordnet ist, einen Zylinderkopf (40), der in Verbindung mit dem Zylinder angeordnet ist und mit mindestens einem Einlassventil (42) und mindestens einem Auslassventil (44) versehen ist, einen Ventilmechanismus (421, 441), der zum Betätigen der Ventile (42, 44) in dem Zylinderkopf angeordnet ist, einen Kolben (25), der in dem Zylinder zwischen seinem oberen Totpunkt (*top dead center -* TDC) und unteren Totpunkt *(bottom dead center -* BTC) beweglich angeordnet ist, **dadurch gekennzeichnet, dass** der Ventilmechanismus (421, 441) dazu angeordnet ist, derart zu funktionieren, dass ein Spülbereich (S) 80-120 Prozentgrad (*percent-degrees -* %deg) beträgt und der Spülbereich (S) seine Spitzenhöhe weniger als 3 % des Durchmessers des Zylinders (20) aufweist, wobei der Begriff "Prozentgrad" (%deg) ein Integral einer relativen Ventilposition über einen Kurbelwinkelbereich bedeutet, wobei der Prozentwert Ventilposition im Verhältnis zu Zylinderdurchmesser bedeutet.

2. Verbrennungsmotor nach Anspruch 1, **dadurch gekennzeichnet, dass** die Bereiche (%deg), die durch ein Einlassventilprofil (510) und ein Auslassventilprofil (500) ausgebildet werden, eine unterschiedliche Größe aufweisen.

3. Verbrennungsmotor nach Anspruch 2, **dadurch gekennzeichnet, dass** das Einlassventilprofil (510) einen größeren Bereich (%deg) ausbildet als das Auslassventilprofil (500).

4. Verbrennungsmotor nach einem der vorhergehenden Ansprüche, **dadurch gekennzeichnet, dass** das Einlassventil dazu angeordnet ist, sich, spätestens wenn der Kurbelwinkel 335 ° beträgt, 1 % zu öffnen, und das Auslassventil, mindestens bis der Kurbelwinkel 385 ° beträgt, 1 % offen angeordnet ist.

5. Verbrennungsmotor (10) nach einem der vorhergehenden Ansprüche 1-3, **dadurch gekennzeichnet, dass** der Ventilmechanismus (421, 441) dazu angeordnet ist, sowohl das Einlassventil (42) als auch das Auslassventil (44) zwischen einem Kurbelwinkel von 310-410 ° mindestens teilweise offen zu halten.

6. Verbrennungsmotor nach Anspruch 1, **dadurch gekennzeichnet, dass** der Kolben (25) mit einer Mulde (251) mit einer Tiefe (260), die im oberen Teil des Kolbens angeordnet ist, und einem im Wesentlichen flachen Randbereich (256), der die Mulde umgibt, versehen ist, wobei die Mulde (251) einen mittleren Oberseitenbereich (252), einen konischen Bereich (253), der sich mit einem Winkel (α) derart, dass die Tiefe der Mulde hin zur Peripherie des Kolbens (25) zunimmt, radial hin zur Peripherie des Kolbens erstreckt, und einen gekrümmten Bodenbereich (254) mit einem Radius (R2), der radial derart nach dem konischen Bereich angeordnet ist, dass die Tiefe der Mulde abnimmt, und eine Lippe (255) zwischen dem gekrümmten Bodenbereich und dem flachen Randbereich (256) umfasst, und dass der mittlere Oberseitenbereich (256) des Kolbens sich auf der gleichem Höhe befindet wie der flache Randbereich (256), so dass ein Kompressionsverhältnis des Motors (10) durch die Form des Kolbens erhöht wird.

7. Verbrennungsmotor (10) nach Anspruch 5, **dadurch gekennzeichnet, dass** der Ventilmechanismus (421, 441) dazu angeordnet ist, das Einlass- und Auslassventil zwischen einem Auslass- und Einlasshub gleichzeitig offen zu halten, so dass die erhöhte thermische Beanspruchung, die durch das erhöhte Kompressionsverhältnis verursacht wird, im Wesentlichen ausgeglichen wird.

8. Verbrennungsmotor (10) nach Anspruch 5, **dadurch gekennzeichnet, dass** der Quetschabstand (256) an der TDC-Position etwa 3,5-4 % des Durchmessers des Zylinders (*diameter of the cylinder -* DC) beträgt.

9. Verbrennungsmotor (10) nach Anspruch 6, **dadurch gekennzeichnet, dass** das Verhältnis der Muldentiefe (260) zum Bodenradius (R2) etwa 0,9-1,2 beträgt.

10. Verfahren zum Betreiben eines kompressionsgezündeten aufgeladenen Verbrennungsmotors, umfassend einen Körper (15), in dem mindestens ein Zylinder (20) angeordnet ist, einen Zylinderkopf (40), der in Verbindung mit dem Zylinder angeordnet ist und mit mindestens einem Einlassventil (42) und mindestens einem Auslassventil (44) versehen ist, einen Ventilmechanismus (421, 441), der die Ventile (42, 44) in dem Zylinderkopf betätigt, einen Kolben (25), der in dem Zylinder angeordnet ist und sich zwischen seinem oberen Totpunkt (*top dead center -* TDC) und unteren Totpunkt *(bottom dead center -* BTC) hin- und herbewegt, **dadurch gekennzeichnet, dass** der Ventilmechanismus (421, 441) derart betrieben wird, dass ein Spülbereich (S) 80-120 Prozentgrad (*percent-degrees -* %deg) beträgt und dass der Spülbereich seine Spitzenhöhe weniger als 3 % des Durchmessers des Zylinders (20) aufweist.

11. Verfahren nach Anspruch 10, **dadurch gekennzeichnet, dass** der Kolben derart hin- und herbewegt wird, dass er an der TDC-Position bei 3,5- 4 % des Abstands des Durchmessers des Zylinders (*diameter of the cylinder -* DC) vom Zylinderkopf gebracht wird.

12. Verbrennungsmotor nach einem der vorhergehenden Ansprüche, **dadurch gekennzeichnet, dass** das Einlassventil, spätestens wenn der Kurbelwinkel 335 ° beträgt, 1 % geöffnet wird, und das Auslassventil, mindestens bis der Kurbelwinkel 385 ° beträgt, 1 % offen ist.

## Revendications

1. Moteur à combustion interne (10) surcompressé, allumé par compression comprenant un corps (15) dans lequel au moins un cylindre (20) est agencé, une culasse (40) agencée en liaison avec le cylindre dotée d'au moins une soupape d'admission (42) et d'au moins une soupape d'échappement (44), un mécanisme de soupape (421, 441) agencé pour faire fonctionner les soupapes (42, 44) dans la culasse, un piston (25) agencé dans le cylindre en étant mobile entre son point mort haut (TDC) et son point mort bas (BTC), **caractérisé en ce que** le mécanisme de soupape (421, 441) est agencé pour fonctionner de façon à ce qu'une zone de balayage (S) soit de 80 - 120 pourcents- degrés (%deg) et la zone de balayage (S) a sa hauteur de crête inférieure à 3 % du diamètre du cylindre (20), dans lequel le terme « poucents-degrés » (%deg) signifie une intégrale de position de soupape relative sur une plage d'angle de bielle, dans lequel le pourcentage signifie la position de la soupape par rapport au diamètre du cylindre.

2. Moteur à combustion interne selon la revendication 1, **caractérisé en ce que** les aires (%deg) formées par un profilé de soupape d'admission (510) et un profilé de soupape d'échappement (500) sont de taille différente.

3. Moteur à combustion interne selon la revendication 2, **caractérisé en ce que** le profilé de soupape d'admission (510) forme une aire plus grande (%deg) que le profilé de soupape d'échappement (500).

4. Moteur à combustion interne selon l'une quelconque des revendications précédentes, **caractérisé en ce que** la soupape d'admission est agencée pour ouvrir à 1 % au plus tard lorsque l'angle de bielle est de 335°, et la soupape d'échappement est agencée en étant ouverte à 1 % au moins jusqu'à ce que l'angle de bielle soit de 385°.

5. Moteur à combustion interne (10) selon l'une quelconque des revendications précédentes 1-3, **caractérisé en ce que** le mécanisme de soupape (421, 441) est agencé pour maintenir à la fois la soupape d'admission (42) et la soupape d'échappement (44) au moins partiellement ouvertes entre un angle de bielle de 310 - 410.

6. Moteur à combustion interne selon la revendication 1, **caractérisé en ce que** le piston (25) est doté d'une cuvette (251) ayant une profondeur (260) agencée dans la partie supérieure du piston et une région de bordure (256) essentiellement plate entourant la cuvette, la cuvette (251) comprenant une région supérieure médiane (252), une région conique (253) s'étendant radialement en direction de la périphérie du piston à un angle (α) tel que la profondeur de la cuvette augmente en direction de la périphérie du piston (25) et une région de plancher incurvée (254) présentant un rayon (R₂) agencée radialement après la région conique de telle façon que la profondeur de la cuvette décroît, et une lèvre (255) entre la région de plancher incurvée et la région de bordure plate (256), et que la région supérieure médiane (252) du piston est au même niveau que la région de bordure plate (256) de sorte que le rapport de compression du moteur (10) est augmenté par la forme du piston.

7. Moteur à combustion interne (10) selon la revendication 5, **caractérisé en ce que** le mécanisme de soupape (421, 441) est agencé pour maintenir les soupapes d'admission et d'échappement simultanément ouvertes entre des courses d'échappement et d'admission de façon à ce que la charge thermique augmentée provoquée par le rapport de compression augmenté soit essentiellement compensée.

8. Moteur à combustion interne (10) selon la revendication 5, **caractérisé en ce que** la distance de chasse (256) à la position TDC est d'environ 3,5 - 4 % du diamètre du cylindre (DC).

9. Moteur à combustion interne (10) selon la revendication 6, **caractérisé en ce que** le rapport profondeur de cuvette (260)/rayon du plancher (R₂) est d'environ 0,9 - 1,2.

10. Procédé de fonctionnement d'un moteur à combustion interne (10) surcompressé, allumé par compression comprenant un corps (15) dans lequel au moins un cylindre (20) est agencé, une culasse (40) agencée en liaison avec le cylindre dotée d'au moins une soupape d'admission (42) et d'au moins une soupape d'échappement (44), un mécanisme de soupape (421, 441) faisant fonctionner les soupapes (42, 44) dans la culasse, un piston (25) agencé dans le cylindre en va-et-vient entre son point mort haut (TDC) et son point mort bas (BTC), **caractérisé en ce que** le mécanisme de soupape (421, 441) fonctionne de façon à ce qu'une zone de balayage (S) soit de 80 - 120 pourcents-degrés (%deg) et que la zone de balayage (S) a sa hauteur de crête inférieure à 3 % du diamètre du cylindre (20).

11. Procédé selon la revendication 10, **caractérisé en ce que** le piston effectue un va-et-vient de sorte qu'il est amené à 3,5 - 4 % du diamètre de la distance de cylindre (DC) à partir de la culasse à la position TDC.

12. Moteur à combustion interne selon l'une quelconque des revendications précédentes, **caractérisé en ce que** la la soupape d'admission est ouverte à 1 % au plus tard lorsque l'angle de bielle est de 335°, et la soupape d'échappement est ouverte à 1 % au moins jusqu'à ce que l'angle de bielle soit de 385.
